# EUROPEAN PATENT APPLICATION

(11) **EP 4 603 828 A1**
(43) Date of publication of application: **20.08.2025**
(21) Application number: 25157034.7
(22) Date of filing: 11.02.2025
(51) Int. Cl.: G01N 23/04

(54) **X-RAY INSPECTION APPARATUS**

(30) Priority: 19.02.2024 JP 2024022789
(71) Applicant: Ishida Co., Ltd., Kyoto-shi Kyoto 606-8392 (JP)
(72) Inventor: HORI, Hiroshi, Ritto-shi, Shiga, 520-3026 (JP)
(74) Representative: Global IP Europe Patentanwaltskanzlei

(57) **Abstract**

In an inspection apparatus that irradiates articles with X-rays and inspects for cracking and chipping of the articles, a side surface of a housing in which X-rays for inspection are scattered is provided with a window through which an interior can be visually confirmed, and an inner side of the window is provided with an X-ray shielding member that shields against X-rays but allows the inside of the housing to be seen. The shielding member is configured from a plurality of plate-form members, and the plate-form members are disposed at a predetermined spacing on the inner side of the window at positions where X-rays leaking from the window are shielded against.

## Description

### TECHNICAL FIELD

The present invention relates to an X-ray inspection apparatus provided with a window through which the inside of a housing where X-rays are irradiated can be seen from the outside.

### BACKGROUND ART

The inside of a housing of an X-ray inspection apparatus is structured so as to not allow X-rays to leak to the outside. Therefore, if one wishes to see inside the housing, it is necessary to provide a window sealed with leaded glass or an acrylic resin plate, as disclosed in, for example, Patent Literature 1 (Japanese Laid-open Patent Publication No. 2004-125646).

However, the use of leaded glass or resin materials poses the problem of making the apparatus expensive. Furthermore, in European countries, measures have been adopted to ban the use of leaded glass; therefore, a demand exists for an X-ray inspection apparatus of which the inside of the housing can be seen without using such an expensive shielding member.

### CITATION LIST

### PATENT LITERATURE

Patent Literature 1: Japanese Laid-open Patent Publication No. 2004-125646

### SUMMARY OF THE INVENTION

### <Technical Problem>

It is an object of the present invention to provide an inexpensive X-ray inspection apparatus in which the inside of the housing where X-rays are irradiated can be seen without using an expensive shielding member.

### <Solution to Problem>

An X-ray inspection apparatus according to one aspect of the present invention comprises
a housing having a window through which an operator can view an interior,
a conveying unit that conveys articles into the housing,
an X-ray irradiation unit that irradiates the articles in the housing with X-rays,
an X-ray detection unit that detects X-rays that have passed through the articles,
an inspection unit that inspects the articles on the basis of detection results from the X-ray detection unit, and
an X-ray shielding plate that shields against the X-rays that leak out through the window of the housing,
the X-ray shielding plate being configured from a plurality of plate-form members, and the plate-form members being disposed at a predetermined spacing on an inner side of the window at positions where X-rays leaking through the window are shielded against.

The invention according to the aspect described above enables an inexpensive X-ray inspection apparatus to be made commercially available because the inside of the housing can be seen through gaps between the plate-form members disposed at a predetermined spacing and scattered X-rays in the housing are prevented from leaking through the window.

In the X-ray inspection apparatus according to another aspect of the present invention, the plurality of plate-form members intersect a travel direction of the X-rays irradiated from the X-ray irradiation unit and oriented toward the window, and at least portions of the adjacent plate-form members overlap each other when viewed along the travel direction of the X-rays.

The invention according to the aspect described above enables the plate-form members disposed at a predetermined spacing prevent scattered X-rays in the housing from leaking to the outside, while allowing the inside of the housing to be seen through the gaps between the plate-form members.

In the X-ray inspection apparatus according to another aspect of the present invention, the plate-form members may be wider than the predetermined spacing. In the invention according to the aspect described above, if plate-form members of greater width are used, the spacing of the plate-form members can be widened accordingly. Therefore, for example, if the width of the plate-form members and the spacing of the plate-form members are selected appropriately, a field of view in which the inside of the housing is seen through the spacing can be widened.

The X-ray inspection apparatus according to another aspect of the present invention has, downstream of the conveying unit, a sorting unit that sorts the articles on the basis of the inspection results, and the window is positioned laterally with respect to the sorting unit.

When a sorting unit is used, for example, it is necessary to allow known defectives to pass through and observe whether these defectives are properly sorted in the sorting unit. In the X-ray inspection apparatus according to one aspect of the present invention, since the window is disposed the sorting unit, a sorting timing can be adjusted while observing a sorting operation of the sorting unit through the window.

In the X-ray inspection apparatus according to another aspect of the present invention, the plate-form members are configured to be able to move along a conveying direction. The spacing of the plate-form members can thereby be adjusted.

In the X-ray inspection apparatus according to another aspect of the present invention, the plate-form members are configured to be able to rotate about vertical axes. In the invention according to the aspect described above, if the planes of the plate-form members are oriented toward, inter alia, the sorting unit to be observed inside the housing, the operation of the sorting unit and the state of the objects to be inspected can be observed.

### <Effect of the Invention>

With the X-ray inspection apparatus according to one aspect of the present invention, it is possible to provide an inexpensive X-ray inspection apparatus in which the inside of the housing can be seen without allowing X-rays to leak, even if a window blocked by an expensive shielding member is not used.

### BRIEF DESCRIPTION OF THE DRAWINGS

FIG. 1 is a front view of an embodiment of an X-ray inspection apparatus according to the present invention;
FIG. 2 is an external perspective view of the X-ray inspection apparatus with a housing interior exposed;
FIG. 3 is an external perspective view of an X-ray shielding plate, showing the structure of a window that shields against X-rays;
FIG. 4(a) is an external perspective view of one plate-form member configuring the X-ray shielding plate, and FIG. 4(b) is an enlarged perspective view of the circled portion in FIG. 4(a);
FIG. 5 is a schematic plan view of plate-form members disposed at a predetermined spacing;
FIG. 6 is a schematic plan view in which the width of each plate-form member is increased and the spacing between the plate-form members is increased;
FIG. 7 is a structural explanatory view of a sorting unit; and
FIG. 8 is a function block diagram of the X-ray inspection apparatus.

### DESCRIPTION OF EMBODIMENTS

An embodiment of the present invention shall be described below with reference to the drawings. This embodiment is not intended to limit the technical range of the present invention. In addition, in the description of the drawings, identical or similar parts are denoted by identical or similar reference symbols. However, the drawings are schematic and dimension ratios and the like therein differ from the actual ratios. In addition, in the present description and drawings, elements having substantially the same functions and configurations are denoted by the same reference numerals, and elements that are not directly related to the present invention are not shown.

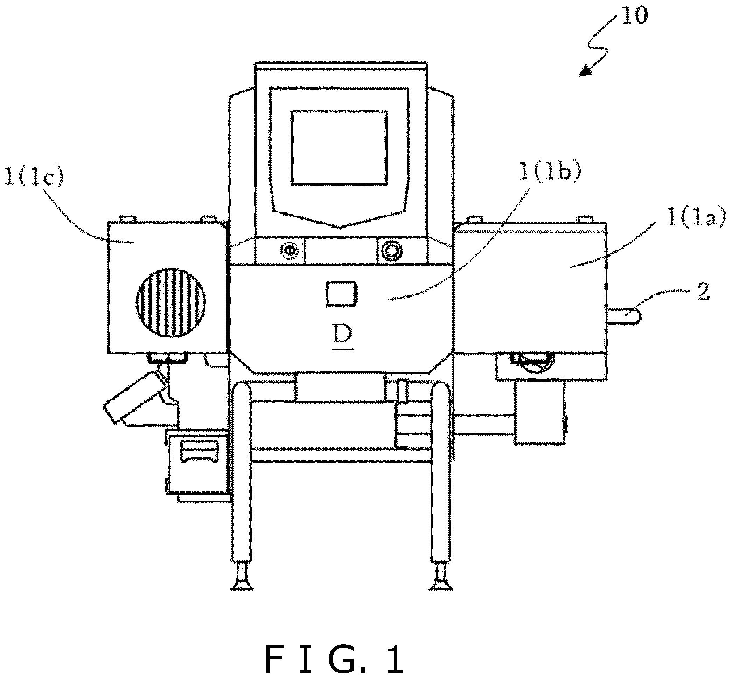

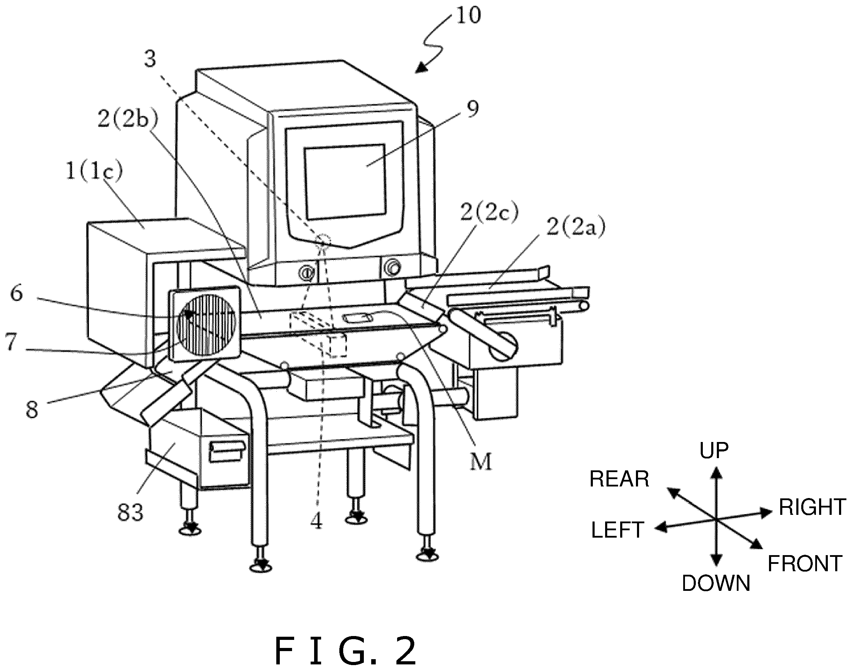

FIG. 1 is a front view of an X-ray inspection apparatus 10, and FIG. 2 is an external perspective view of the X-ray inspection apparatus 10 with the inside of a housing 1 partially exposed. In these drawings, the X-ray inspection apparatus 10 is used, for example, to inspect packaged candies for cracking, chipping, and the presence of foreign objects, but the objects to be inspected are not limited to packaged candies; the apparatus can be applied to a variety of articles.

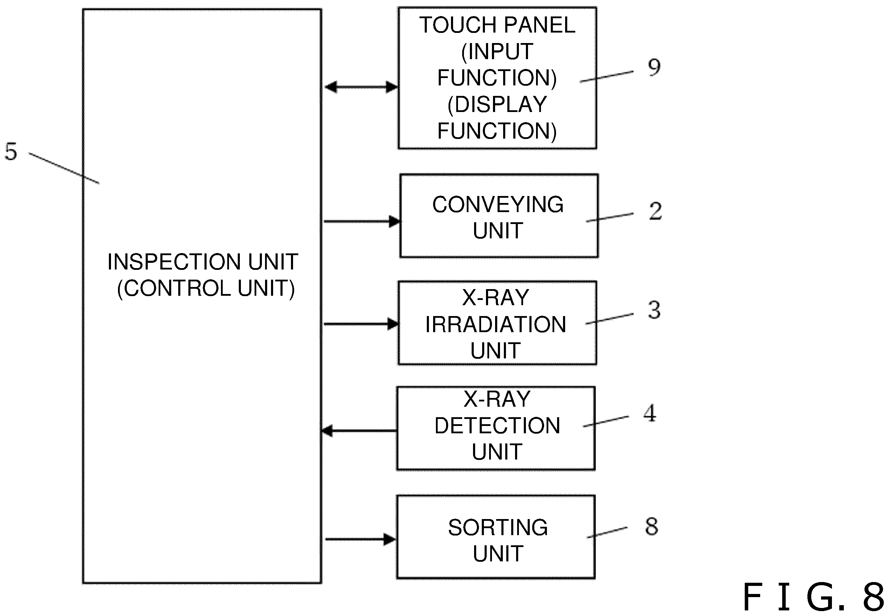

The X-ray inspection apparatus 10 comprises a conveying unit 2 that conveys articles M (objects to be inspected) into the housing 1, and inside the housing 1, an X-ray irradiation unit 3 that irradiates the articles M with X-rays, an X-ray detection unit 4 that detects X-rays that have passed through the articles M, an inspection unit 5 (see FIG. 8) that inspects cracking, chipping, etc., in the articles M on the basis of detection results from the X-ray detection unit 4, a window 6 through which the inside of the housing 1 can be seen, an X-ray-shielding plate 7 that shields against X-rays leaking from the window 6 to the outside of the housing 1, a sorting unit 8 that sorts the articles into useable and defective articles in accordance with inspection results from the inspection unit 5, and a touch panel 9 for operating the X-ray inspection apparatus 10.

The housing 1 is a structure in which an internal space is surrounded by a stainless steel material that shields against X-rays, the housing 1 being provided with an entrance-side protective cover 1a, a central body 1b having an opening/closing door D, and an exit-side protective cover 1c.

The entrance-side protective cover 1a is tunnel-shaped with open left and right sides, and a protective curtain (not shown) is hung at an entrance on the right side. The exit-side protective cover 1c is box-shaped with openings in a surface in contact with the central body 1b and in a bottom surface, and articles M that have been inspected are discharged from the bottom surface side opening of the protective cover 1c through the sorting unit 8.

The conveying unit 2 is configured from a first conveying unit 2a covered by the entrance-side protective cover 1a, a second conveying unit 2b inside the central body 1b, and a chute 2c connecting the conveying units 2a, 2b. The conveying units 2a, 2b are both configured from belt conveyors, and a conveying surface of the first conveying unit 2a is disposed at a position one step higher than a conveying surface of the second conveying unit 2b. Therefore, the downwardly inclined chute 2c disposed between the conveying units 2a, 2b is attached in a floating state without being in contact with the conveying surfaces of the conveying units 2a, 2b. A belt receiver that supports a back surface of an endless belt of the second conveying unit 2b has a slit in a direction (width direction) orthogonal to a conveying direction at a central position where X-rays are irradiated, and the X-ray detection unit 4 is disposed in the width direction along the slit.

The X-ray irradiation unit 3 is incorporated in an upper part inside the central body 1b, and the X-ray detection unit 4 is incorporated in a hollow portion surrounded by a travel path of the endless belt of the second conveying unit 2b. The X-ray irradiation unit 3 is configured from an X-ray source (not shown) positioned behind the touch panel 9, and a collimator that focuses the X-rays irradiated from the source into a fan-form beam and irradiates the X-ray detection unit 4. In addition, the X-ray detection unit 4 is configured from a line sensor disposed in the width direction orthogonal to the conveying direction of the second conveying unit 2b. The line sensor is provided with a photodiode and a scintillator placed on top thereof, and is configured so as to convert X-rays that have passed through the articles M and the endless belt into electrical signals and output the electrical signals.

The window 6 is provided on a front side of the exit-side protective cover 1c, and the sorting unit 8, which sorts the articles when the inspection result is "defective," is disposed inside the protective cover 1c. The window 6 is provided at a position where a sorting operation of the sorting unit 8 can be observed. A sorting timing of the sorting unit 8 varies depending on a conveying speed of the articles M and an output timing of the inspection results from the inspection unit 5, and it is therefore necessary, before the start of operation, to pass a known defective article through the sorting unit to observe through the window 6 whether the article is properly sorted. If the sorting timing is off, the sorting timing of the sorting unit 8 is adjusted while the sorting operation is observed through the window 6.

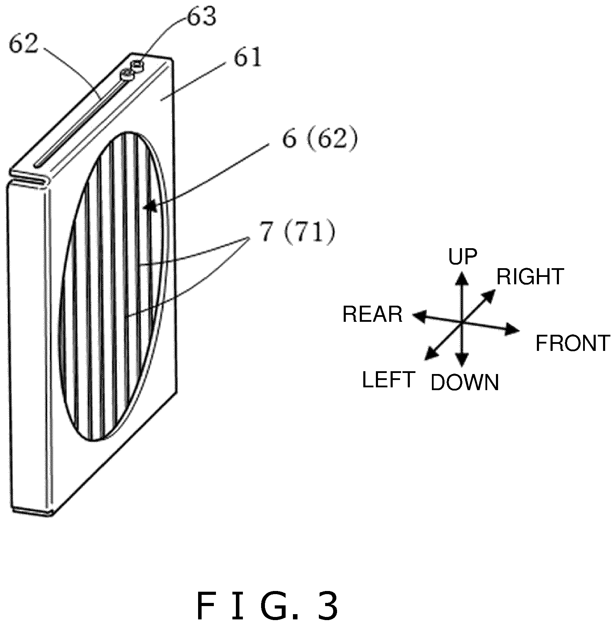

As shown in FIG. 3, the X-ray-shielding plate 7, which shields against X-rays leaking through the window 6, is attached to an inner side of the window 6. The window 6 is configured from a stainless steel frame 61, a circular opening 62 is formed in a front side surface, and the X-ray-shielding plate 7 is attached to a back side (rear side) of the opening 62. The X-ray-shielding plate 7 is configured from a plurality of rectangular plate-form members 71 also made of stainless steel, and these plate-form members 71 are disposed in a left-right direction at a predetermined spacing, whereby X-ray leakage is prevented.

Long holes 62 extending in a longitudinal direction are formed on an upper surface and a lower surface of the frame 61, bolts 63 are inserted into the long holes 62, and the bolts 63 are connected to upper and lower ends of the plate-form members 71, so that the plate-form members 71 can be fixed to the frame 61. In FIG. 3, only two heads of bolts 63 are shown and the heads of other bolts 63 are omitted, but bolts 63 corresponding to each of the plate-form members 71 are attached to the upper and lower ends thereof. In addition, the bolts 63 inserted into the long holes 62 can be moved along the long holes 62, the bolts 63 are moved along the long holes 62 while connected to the plate-form members 71 as described hereinafter, and the plate-form members 71 can be fixed to the frame 61 when nuts are screwed onto the bolts 63 and tightened at appropriate positions.

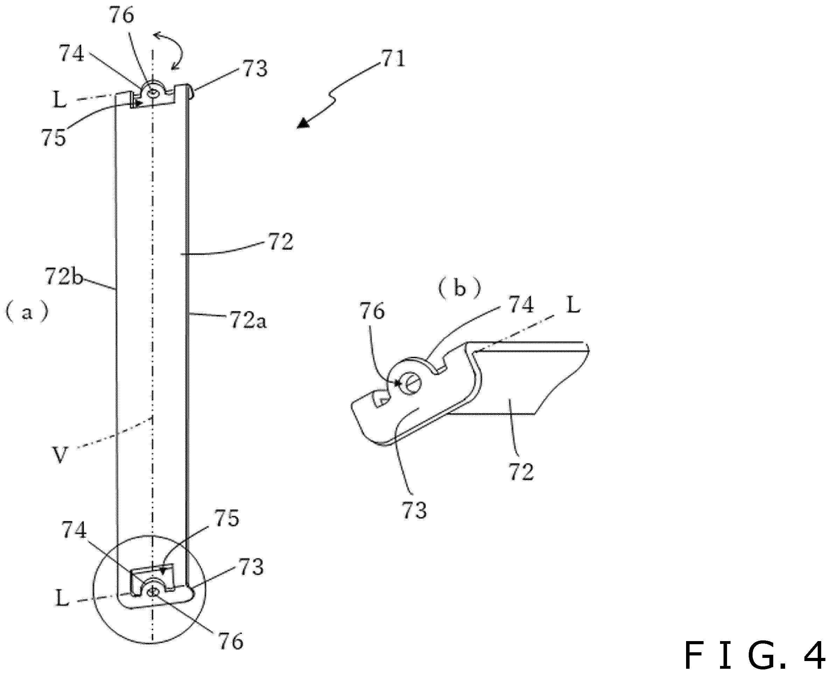

FIG. 4(a) is an external perspective view of a plate-form member 71, and FIG. 4(b) is an enlarged perspective view depicting the circled end in FIG. 4(a), with the orientation changed 90 degrees. In these drawings, the plate-form member 71 has a rectangular body 72 extending in a vertical direction, and upper and lower ends 73 extending in a horizontal direction. The upper and lower ends 73 are obtained by bending each of the ends of the body 72 into the shape of an L, and before bending, both ends 73 of the body 72 are perforated to form openings 75 with semicircular protrusions 74 remaining. When the ends 73 connected to the body 72 on both sides of the protrusions 74 are bent into L shapes at width-direction bending lines L passing through center lines of round holes 76 in the centers of the protrusions 74, the ends 73 are bent in the horizontal direction. Accordingly, the protrusions 74 fall in the horizontal direction, and a vertical line V of the body 72 overlaps the centers of the round holes 76 of the protrusions 74.

The round holes 76 of the protrusions 74 are holes into which the bolts 63 shown in FIG. 3 are inserted. After the plate-form members 71 have been inserted between the upper surface and the lower surface of the frame 61, the bolts 63 are inserted toward the round holes 76 in a state in which the round holes 76 and the long holes 62 are aligned, and when nuts (not shown) are screwed onto and fastened to the inserted bolts 63, the ends 73 of the plate-form members 71 are fixed to the upper surface and the lower surface of the frame 61.

With the bolts 63 in a loosened state, when the bolts 63 are moved along the long holes 62, the spacing of the plate-form members 71 can be adjusted. Furthermore, when the plate-form members 71 are rotated about the vertical lines V passing through axes of the upper and lower bolts 63, orientations of the plate-form members 71 can be changed. When the orientations of the plate-form members 71 are changed, the spacing of the plate-form members 71 must be adjusted in accordance with a breadth of the plate-form members 71 so that scattered X-rays in the housing 1 do not leak to the outside through gaps between the plate-form members 71. When the breadth of the plate-form members 71 is changed, it is preferable to extend one breadth-directional side 72a of the body 72 in the width direction and leave another side 72b unchanged.

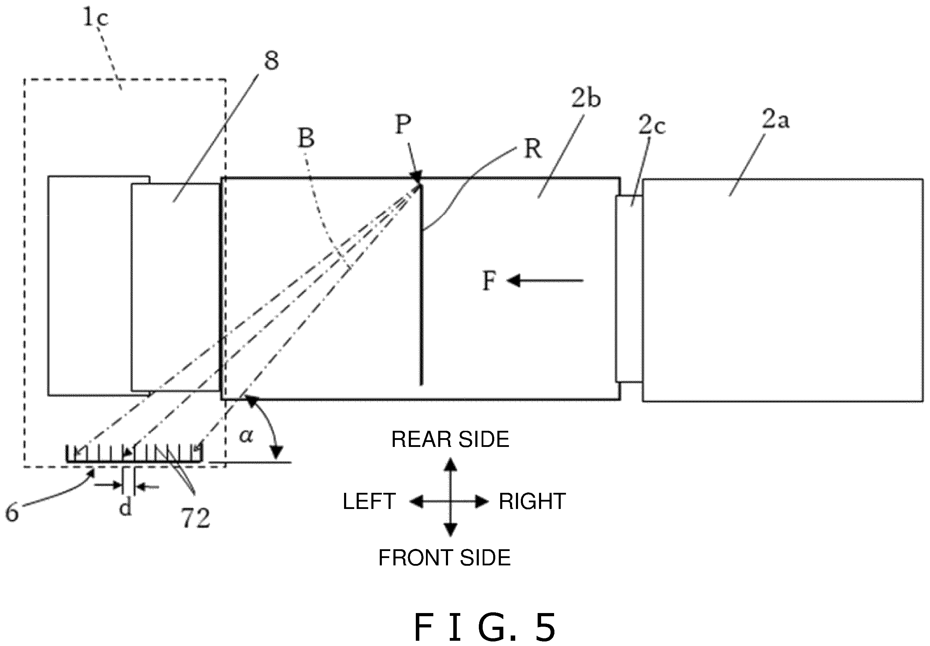

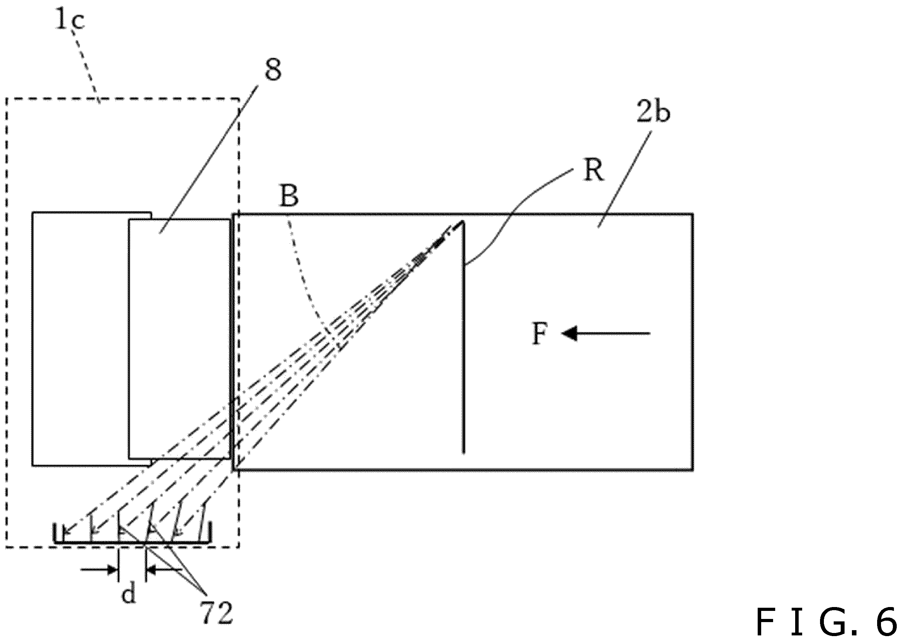

FIGS. 5 and 6 are plan views of the plate-form members 71 disposed so that X-rays will not leak out from gaps d therebetween. In particular, FIG. 5 is an example in which a plurality of plate-form members 71 of the same breadth are used, and these members are set apart at equal spacing d so as to face in a direction orthogonal to a direction F in which the articles M are conveyed. FIG. 6 is an example in which plate-form members 72 of different breadths are used, showing the spacing d of the plate-form members 72 in a case in which the members are arranged with the orientations thereof incrementally changed in small amounts.

In the housing 1 of FIG. 5, the source of the scattered X-rays is an X-ray irradiation region R. Of the X-rays exiting this region R, the X-ray having the largest angle of incidence *α* with respect to the window 6 is an X-ray B emitted from an X-ray irradiation point P on a rearmost side. As the irradiation direction of this X-ray B shifts to the left, the angle of incidence of the X-rays with respect to the window 6 gradually decreases. Therefore, as shown in FIGS. 5 and 6, when this X-ray B is represented by a dotted line, if the right-side plate-form member 72 of each of two plate-form members 72 spaced apart by a predetermined interval d blocks the X-ray B, the X-ray B will not pass through the interval d between the plate-form members 72. In this case, if the breadth of the right-side plate-form member 72, i.e., a length in the front-rear direction, is short, the X-ray B will leak out, and if the breadth is long, the X-ray B will not leak out. Therefore, if the interval d between the two adjacent plate-form members 72, the breadth of the adjacent plate-from member 72 to the right, and the orientation thereof are set appropriately, the X-ray B will not leak out. The breadth, interval d, and orientation of each plate-form member 72 are determined under such conditions.

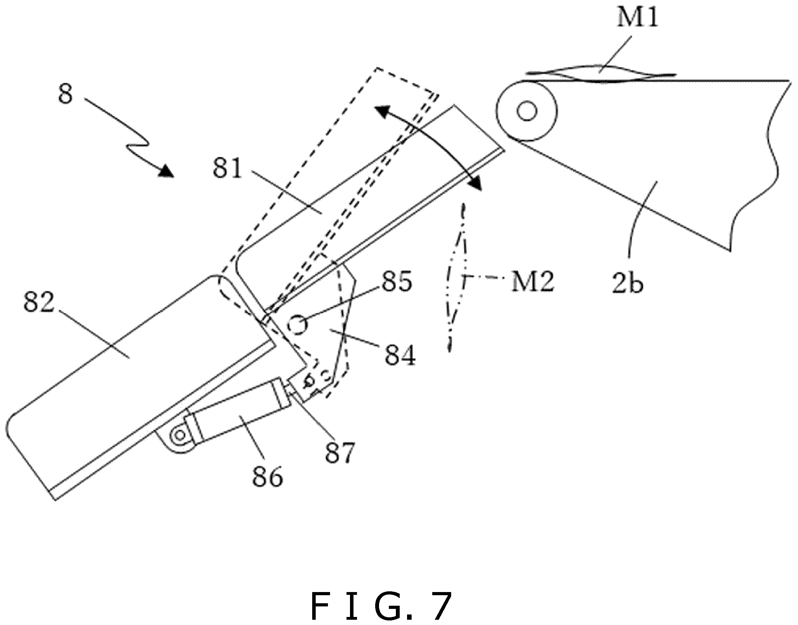

The sorting unit 8 sorts articles into useable and defective on the basis of the inspection results from the inspection unit 5. In this embodiment, as shown in FIG. 7, if the inspection result is "useable," a useable article M1 discharged from the second conveying unit 2b is conveyed downstream via a chute 81 and a slider 82, and if the inspection result is a defective article M2, the chute 81 is lifted and the defective article M2 discharged from the second conveying unit 2b is dropped and recovered in a recovery box 83 shown in FIG. 2.

Specifically, a bracket 84 is attached to a bottom surface of the chute 81, and the chute 81 and the bracket 84 are configured to swing vertically about a horizontal shaft 85 provided to the bracket 84. An air cylinder 86 is used as an actuator. When a piston 87 linked to the bracket 84 extends, the chute 81 is lifted, and when the piston 87 retracts into the cylinder, the chute 81 returns to an initial position and operates to feed acceptable articles M1 to the slider 82.

FIG. 8 is a block line diagram of a control system of the X-ray inspection apparatus 10. In the diagram, the inspection unit 5 is configured from a control unit configured from a microcomputer, and is electrically connected to the touch panel 9, the conveying unit 2, the X-ray irradiation unit 3, the X-ray detection unit 4, and the sorting unit 8. The inspection unit 5 is programmed to drive and control these components.

The touch panel 9 is configured so that, by operating a screen displayed on a liquid crystal display, it is possible to start and stop the X-ray inspection apparatus 10 and to set necessary operating conditions and inspection conditions. In addition, a speed of the conveying unit 2, X-ray intensity of the X-ray irradiation unit 3, etc., can be set on an initial screen before the start of operation. Furthermore, for example, a screen for adjusting the sorting timing of the sorting unit 8 is displayed after the start of operation.

An embodiment was described above, but the present invention is not limited to this embodiment; other embodiments can be adopted. For example, a third conveying unit may be connected to an exit side of the second conveying unit 2b, an arm that swings over the conveying surface may be attached to a side of the third conveying unit, and a sorting apparatus may use the arm to discharge defective articles conveyed from the second conveying unit 2b to the side in the conveying direction. In addition, a drop-type belt conveyor may be disposed on the exit side of the second conveying unit 2b. In this case, a swing fulcrum of the belt conveyor is disposed adjacent to the exit side of the second conveying unit 2b. In addition, a protective curtain is hung at the exit side of the second conveying unit 2b.

In the previously described embodiment, the plate-form members 72 are configured to be capable of individually rotating about vertical lines V passing through the center shafts of the bolts 63, but the plate-form members 72 may be linked by a shared link mechanism and configured to change orientation simultaneously when the link mechanism is operated. In this case, a rotation range of the link mechanism may be limited so that the X-ray irradiation region R can be seen through the gaps d of the plate-form members 72.

In the above embodiment, the upper and lower ends 73 of the plate-form members 72 can be movably fixed in the long holes 62 of the frame 61, but optionally only the upper ends 73 of the plate-form members 72 are fixed in the long holes 62 of the frame 61.

### REFERENCE SIGNS LIST

- 1: Housing
- 2: Conveying unit
- 3: X-ray irradiation unit
- 4: X-ray detection unit
- 5: Inspection unit
- 6: Window
- 7: X-ray-shielding plate
- 72: Plate-form member
- 8: Sorting unit
- d: Interval
- M: Article

## Claims

1. An X-ray inspection apparatus comprising:
a housing having a window which is configured to enable an operator to view an interior,
a conveying unit configured to convey articles into the housing,
an X-ray irradiation unit configured to irradiate the articles in the housing with X-rays,
an X-ray detection unit configured to detect X-rays that have passed through the articles,
an inspection unit configured to inspect the articles on the basis of detection results from the X-ray detection unit, and
an X-ray shielding plate configured to shield against the X-rays leaking out through the window of the housing,
wherein
the X-ray shielding plate has a plurality of plate-form members, and
the plurality of plate-form members are disposed at a predetermined spacing on the inner side of the window at positions where X-rays leaking through the window are shielded against.

2. The X-ray inspection apparatus according to claim 1, wherein
the plurality of plate-form members intersect a travel direction of the X-rays irradiated from the X-ray irradiation unit and oriented toward the window, and at least portions of the adjacent plate-form members overlap each other when viewed along the travel direction of the X-rays.

3. The X-ray inspection apparatus according to claim 1 or 2, wherein
the plurality of plate-form members are wider than the predetermined spacing.

4. The X-ray inspection apparatus according to any of claims 1 to 3, further comprising:
a sorting unit disposed downstream of the conveying unit with respect to a conveyance direction of the conveyance unit, the sorting unit being configured to sort the articles on the basis of the inspection results,
wherein the window is arranged to the side of the sorting unit in the conveyance direction.

5. The X-ray inspection apparatus according to any of claims 1 to 4, wherein
the plurality of plate-form members are configured to move along the conveying direction.

6. The X-ray inspection apparatus according to any of claims 1 to 5, wherein
the plurality of plate-form members are configured to rotate about vertical axes.
